(19) Europäisches Patentamt
European Patent Office
Office européen des brevets

(11) EP 2 706 595 A1

(12) EUROPEAN PATENT APPLICATION

(43) Date of publication:
12.03.2014 Bulletin 2014/11

(51) Int Cl.:
H01M 4/04 (2006.01)
H01M 4/24 (2006.01)
H01M 4/42 (2006.01)
H01M 12/06 (2006.01)
C01B 3/08 (2006.01)
H01M 4/12 (2006.01)
H01M 4/26 (2006.01)
H01M 4/46 (2006.01)
H01M 12/08 (2006.01)

(21) Application number: 13174188.6

(22) Date of filing: 28.06.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.09.2012 EP 12183848

(71) Applicants:
• Brener, Michael
Richmond Hill, Ontario L4C0E7 (CA)

• Fertman, Mark
Toronto ON M2N IPS (CA)

(72) Inventors:
• Brener, Michael
Richmond Hill, Ontario L4C0E7 (CA)
• Fertman, Mark
Toronto ON M2N IPS (CA)

(74) Representative: Meissner, Bolte & Partner
Anwaltssozietät GbR
Widenmayerstrasse 48
80538 München (DE)

(54) Anode element for a fuel and electrical power generator unit and process of making same

(57) Anode element for a fuel and electrical power generator unit, the anode element being formed as a massive metal body made from at least one of magnesium, zinc, or aluminium, or an alloy of at least one of these and comprising a micro- or nanoporous activated surface layer.

Fig. 4

## Description

The present invention relates to an anode element for a fuel and electrical power generator unit, in which conductive water or another conductive aqueous solution is used as an electrolyte and hydrogen source. Furthermore, it relates to a process for making such anode element.

Electrochemical energy sources, which use seawater as an electrolyte, are suited for a number of applications. Examples have been ships and other watercraft, electronic devices, toys and the like, and highly promising future applications can be seen on a large scale in the growing field of renewable energies. Various types of so-called seawater cells are known.

One of the known types of a seawater cell is a magnesium/oxygen battery comprising a magnesium anode, which utilises seawater as an electrolyte as well as oxygen dissolved in the seawater as an oxidizing agent. The chemical processes taking place in this cell as follows:

On the anode, magnesium is dissolved according to the equation

$$2Mg = 2Mg^{2+} + 4e\text{-},$$

On the cathode, oxygen is consumed according to the equation

$$O_2 + 2H_2O + 4e\text{-} = 4OH\text{-}.$$

Summarizing, these processes can be described in a simplified manner as follows:

$$2Mg + O_2 + 2H_2O = 2Mg(OH)_2.$$

The anode material can be, as exemplified above, magnesium, but it can also be Aluminium, zinc, and a mixture of these elements, and alloys thereof.

US 4,822,698 discloses an energy cell/battery for use in seawater. This battery works according to the aforementioned electrochemical reactions, with magnesium or zinc being used as an anode material and an oxygen electrode as a cathode. The oxygen supplied to the cathode is dissolved in the seawater. This seawater battery consists of a cylindrical oxygen electrode cathode. The structure comprises single or several anode rods, which contain magnesium or zinc. The oxygen electrode is similar to those used in other batteries, e.g., in US 6,372,371 B1.

US 5,405,717 discloses a seawater cell, the power of which is slightly increased compared to that of US 4,822,698. This power increase is caused by the effect of waves, which increases the flow of the seawater through the cathode so as to supply oxygen. The cell structure includes water flow conducting means, which allows the water to flow through the cell. US 5,225,291 discloses a seawater battery which is operable with or without dissolved oxygen due to the use of a hybrid cathode. US 5,427,871 relates to galvanic seawater cells and batteries, respectively, which use oxygen dissolved in the seawater as an oxidizing agent.

Another galvanic type of seawater battery, in which normally seawater is used as an electrolyte, comprises a magnesium anode and a cathode of copper chloride or silver chloride. These long-term batteries do not require oxygen dissolved in seawater; however, they have a small output energy density, are generally heavy, and have large spatial requirements. For example, a Mg/CuCl battery with one watt-year as an output energy may have a length of 8 ½ feet, a diameter of 9 inches, and a weight of approximately 100 pounds. Moreover, these batteries have a limited flexibility with respect to the design and are restricted to a longitudinal shape. Examples are described in US 4,601,961, US 5,288,564, or US 6,656,628 B2.

Metal-air cells are known primary cells comprising an anode made of metal, e.g., of aluminium, magnesium or zinc, and an air cathode which is disposed with a small spacing from the metallic anode, but does not touch the same. A suitable electrolyte is provided in a space between the cathode and anode. The anode is immersed into the electrolyte. Different embodiments of such batteries and methods for the production and use of such batteries are known from the prior art, compare, for example, US 5,004,654, US 5,360,680, US 5,376,471, US 5,415,949, US 5,316,632. Typical metal-air batteries and metal-air fuel cells, respectively, are described, for example, in US 6,127,061.

Besides their use in the above-referenced electrical energy generators, magnesium or electrochemically related metals and their alloys, placed in aqueous solutions, have been used to generate hydrogen, which is being considered as an important energy source of the future. Basic concepts in this regard have been disclosed e.g. in US 3,256,504; US 3,892,653 or US 4,436,793 and further developed e.g. in US 2008/0268306. All of these prior art documents disclose hydrogen generators containing alternating plates of magnesium or an electrochemically comparable material and plates of an electrochemically passive material in an electrolyte, for example a saline solution.

Based on the above-described prior art it is an object of the present invention to provide an improved energy source, which is constructed in a simple manner and is highly efficient, and applicable for many purposes.

This and other objects are solved by an anode element for a fuel and electrical power generator unit in accordance with claim 1, as well as by a process for making such anode element comprising the features of claim 5. Embodiments of the invention are subject of the respective dependent claims.

It is an aspect of the invention, to look for an improved anode element for use in the above-specified type of hydrogen and electrical power generator, which in particular improves the performance and in particular the response behaviour of such generator unit during an initial stage of its operation and/or which enables or at least facilitates the use of a low concentration electrolyte or even tap water in such generator unit. It is a further aspect of the invention, to consider modifications of the anode element surface, which provide advantageous effects in this regard.

Surprisingly the inventors found that providing the anode element with a porous (micro- or nanoporous) and activated surface layer results in considerable improvements in both regards. Moreover, at least in specific arrangements including suitable catalyser elements even the overall device performance (hydrogen output and/or electrical power output per device volume units or time units) can be significantly improved.

In an embodiment of the anode element, the micro- or nanoporous activated surface layer comprises a halide, in particular chloride, of the respective anode metal. In other embodiments, resulting from activation mechanisms which are not based on hydrogen halides, the surface layer can comprise other inorganic or organo-metallic components which facilitate the development of hydrogen from an aqueous solution at its interface with the activated surface layer.

In a further embodiment, the massive metal body is in the overall shape of a sheet or plate or ingot and comprises two opposing micro- or nanoporous activated surface layers. In alternative embodiments, more specifically in embodiments wherein the hydrogen source liquid contacts only one surface of a hydrogen developing sheet or plate or ingot, it can be sufficient that only the contact surface of such sheet or plate or ingot is micro- or nanoporous and activated. On the other hand, anode elements which are in the basic shape of small spheres or cylinders or other granules, it is preferred that the whole (single) surface of such anode elements comprises a micro- or nanoporous and activated surface layer.

More specifically, in embodiments of the invention, the micro- or nanoporous activated surface layer has a thickness between 10 $\mu$m and 1 mm, preferably between 50 and 500 $\mu$m, and has a surface roughness between 200 nm and 500 $\mu$m, preferably between 1 and 100 $\mu$m. Nevertheless, it is to be noted that the invention is not limited to these ranges but can, e.g. in large generator units for industrial use, be implemented with values outside the above ranges.

In a process for making an anode element according to the invention, a pre-fabricated massive metal body is treated in at least one surface treatment step with at least one alkaline or acidic solution for providing the micro- or nanoporosity and the activated state of the surface layer.

In an embodiment of the process of the present invention, the pre-fabricated massive metal body is treated (a) with an acid etch, in particular comprising chromic acid, and thereafter (b) with a hydrogen halide solution, in particular comprising hydrochloric acid. Further treatment steps can be provided, according to embodiments mentioned further below or in line with surface activation procedures known in the art.

In one further embodiment of the process, the or at least one surface treatment step comprises immersing the pre-fabricated massive metal body into a respective liquid. Alternatively, the or at least one surface treatment step can be carried out by subjecting the surface or surfaces of the pre-fabricated massive metal body to a flow of a respective steam. In a further embodiment, prior to the surface treatment step a cleaning step is carried out, in particular a soaking the massive metal body into an alkaline solution. Even this step can be implemented by immersing the body into a bath of the respective solution or by subjecting its surface to a flow of a liquid solution or to a stream of a cleaning gas or steam, respectively.

In further embodiments, prior to step (a) and/or between steps (a) and (b) and/or after step (b) at least one rinsing step is carried out, in particular a rinsing with water (preferably deionised). Even this rinsing can be implemented in a steady rinsing solution or a flow of such solution or in a stream of such solution in its gaseous state.

Under the aspect of practical use, a further embodiment can be preferred wherein the or at least one surface treatment step for providing the micro-nanoporosity and the activated assembled state of the surface layer is carried out in an assembled configuration of the pre-fabricated massive metal body, preferably in a state wherein a plurality of pre-fabricated bodies is arranged in predetermined relationship to each other and/or to anode or catalyser bodies, respectively, of the fuel and electrical power generator unit. More specifically, the arrangement of anode elements and cathode or catalyser elements, respectively, of the fuel and electrical power generator unit can, after the last surface treatment step, be immediately inserted into tap water or a low-concentration saline solution for starting hydrogen and electrical power generation. If immediate hydrogen and electrical power generation is not required, the whole assembly or its individual parts separately can be dried out by compressed air, dryer, blower etc and will become reactive only upon immersion into aqueous conductive solution like water or saline solution.

Further aspects and effects of the invention become clear from the more detailed explanation of embodiments on the basis of the attached drawings, of which

Fig. 1A shows an exploded view and Fig. 1B an assembled perspective view of a fuel and electrical power generating block according to the invention,

Fig. 2 shows a perspective view of the inner structure of a first component of the embodiment according to Figs. 1A and 1B,

Fig. 3 shows a schematic diagram of a generator block according to Fig. 1B with peripheral components, and

Fig. 4 shows a schematic diagram of a generator block according to Fig. 1B, embedded in an engine drive system.

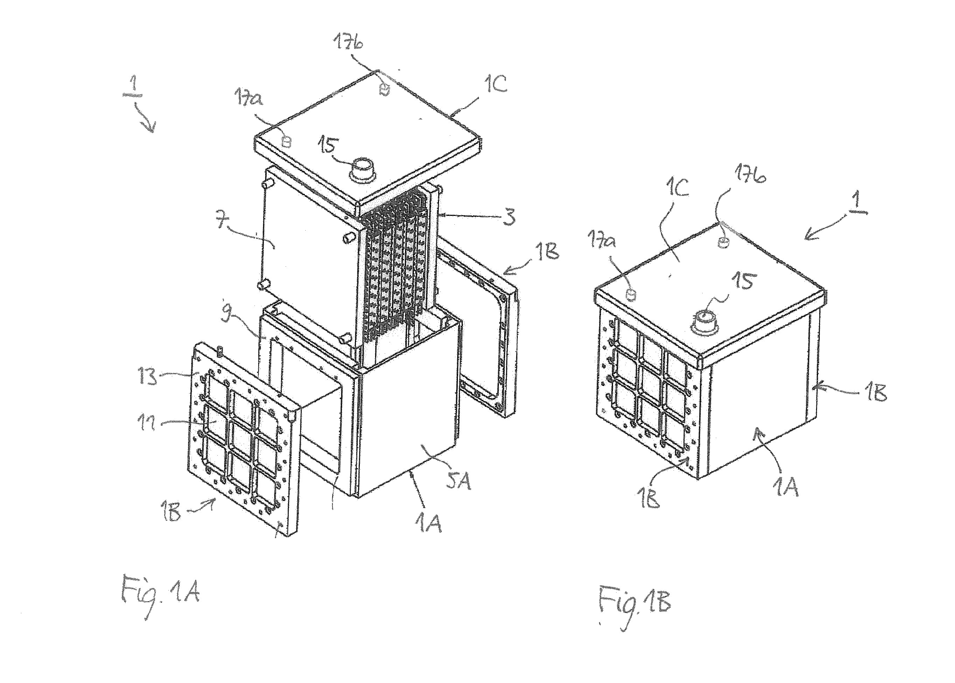

Fig. 1A and 1B schematically illustrate, as an embodiment of the invention, a fuel and electrical power generating unit (generator block) 1, the outer shape of which is that of a cuboid and which comprises a larger first component 1A for generating hydrogen and two smaller second components 1B, attached to the first components at both ends thereof, for generating electrical power. A cover 1C covers both the first component 1A and the two second components 1B.

The first component 1A comprises a hydrogen generating block 3 arranged in a plastic housing portion 5A, and the respective components 1B each comprise an anode plate 7 (which in Fig. 1A is arranged as respective end plates of the hydrogen generating unit 3), a conductive (but partly insulated) frame 9, a membrane-like air cathode 11, and an outer end plate 13 made from plastic and over most of its surface having a grid shape. On the cover 1C, an outlet opening 15 for exhausting hydrogen produced in the first component and electrical contacts 17a, 17b for connecting the generator block 1 to an electrical load are provided.

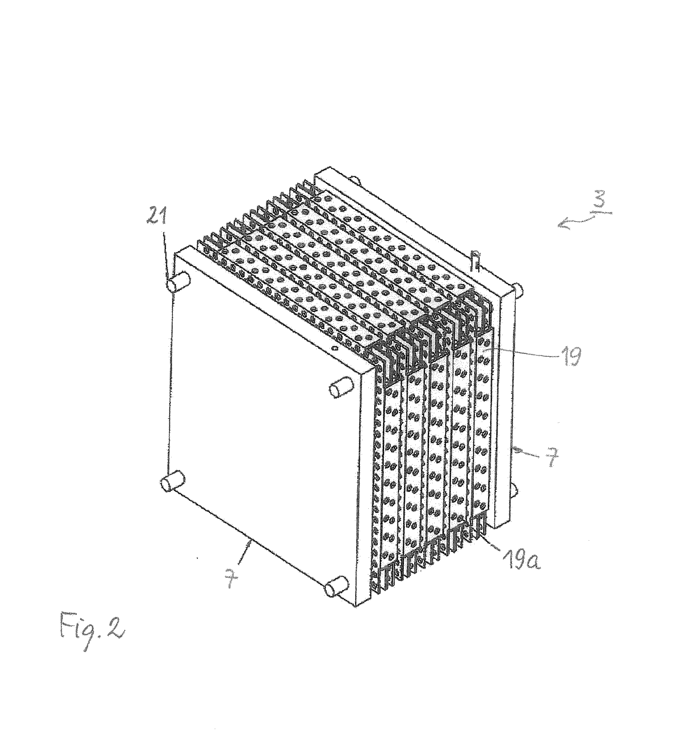

Fig. 2 separately illustrates the hydrogen generating block 3 of the first generator block component 1A, together with the end plates 7 which, according to their function, are part of the respective second generator block components 1B (as mentioned above). The exemplary hydrogen generator block comprises five sub-units 19 in a parallel arrangement to each other and to the end plates 7. In operation, the generator block 3 is arranged in the housing 5A of the first component 1A and immersed in sea water or an alkaline solution or another suitable electrolyte fluid (not shown).

The sub-unit 19 and the end plates 7 are stacked on each other at predetermined spacings and held by rods 21 provided close to the corners of the quadrangular plates or sub-units, respectively. As can be seen in Fig. 2, but described in more detail further below, each of the sub-units 19 has a 3-layer configuration, and most of the extension of their edges is covered with a rail 19a. All outer surfaces of each sub-unit 19 comprise a regular arrangement of through-holes making each of the outer surfaces liquid-permeable.

The end plates 7 are, in an exemplary embodiment, made from magnesium or an alloy thereof, whereas the outer surfaces of the sub-units 19 are made from stainless steel (or another iron alloy) and the rods 21 are made from zinc or an alloy thereof. Other materials can be chosen, depending on the specific operating conditions and taking performance requirements as well as cost constraints of the generator block into account.

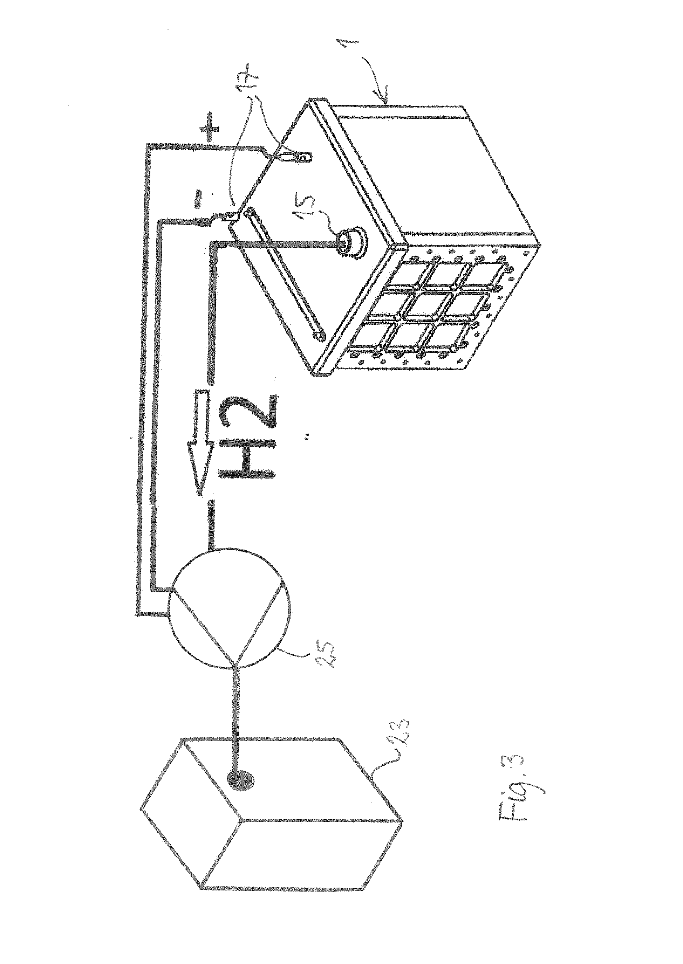

Fig. 3 schematically illustrates how a generator block 1 can be embedded in a technical system which includes a tank 23 as hydrogen storing means and a pump 25 for pumping hydrogen produced in the generator block 1 and exhausted through the hydrogen outlet 15 into the tank. The pump can (at least partly) be driven by electrical energy which is delivered by the generator block 1 itself, through its electrical contacts 17.

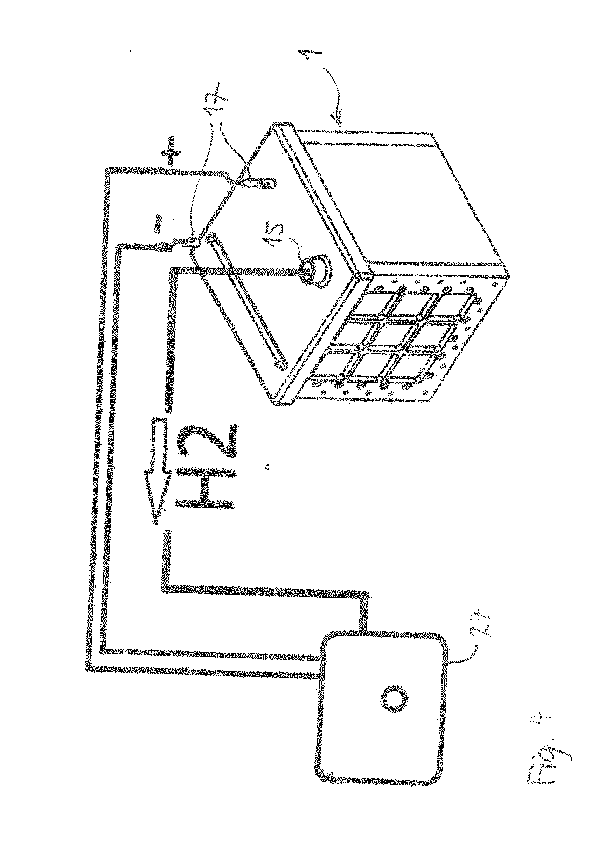

Fig. 4 schematically illustrates another system, wherein the generator block 1 is connected to a rotary combustion engine 27, via both the hydrogen outlet 15 and the electrical contacts 17, for delivering hydrogen for fuelling the combustion engine and electrical energy for operating the ignition and further electrical components thereof, to the engine.

The hydrogen developing magnesium or magnesium alloy components of the above described generator unit or of similar units comprise a micro- or nanoporous and chemically activated surface layer. This layer can, according to an embodiment of the process for making such component, be prepared from a pre-fabricated industrial grade magnesium body according to the following steps:

1) Soak (Alkaline) Cleaning for potential oil removal,
2) Water rinse
3) Acid Etch (Chromic Acid 5.76 - 6.7oz/gal and Nitric Acid 7.6 - 10.6%v/v)
4) DI Water Rinse
5) HCL (Hydrochloric Acid 25% - 50 % (v/v)) Magnesium or its alloys upon immersion into diluted Hydrochloric Acid solution for at least 10 seconds releases H2 and forms a thermally activated magnesium layer as per the following equation:

$$Mg + 2HCl \rightarrow MgCl2 + H2$$

During immersion into Hydrochloric Acid solution, Magnesium heats up within 10 sec up to 80C.
6) DI Water Rinse.

Once a magnesium body or, more specifically, a pre-fabricated arrangement of magnesium bodies which has been treated in this way is immersed into an aqueous solution, in particular into salt water or even tap water, it almost immediately starts generating hydrogen from this solution, in accordance with the above-referenced reaction equation. The amount of hydrogen produced per time unit is significantly higher than with the pre-fabricated body or bodies which have not been chemically treated.

The best results with respect to the hydrogen generation and/or the electrical power generation can be achieved with a combined arrangement of chemically activated, porous hydrogen generating components (anode elements) and catalyser components (cathode elements). In such arrangements, catalyser or cathode elements, respectively, can be used which are known in the art, and in stacked plate configurations with alternating hydrogen developing plates and catalyser plates, as exemplified further above.

In a further exemplary embodiment of the manufacturing process of porous and activated anode elements, a pre-assembled plate stack or other pre-assembled arrangement of anode and cathode bodies can be subjected to the above sequence of steps or at least to selected steps from such sequence. For example, a pre-manufactured plate stack can be immersed into an acidic solution, such as hydrochloric acid or acetic acid or sulphuric acid, for a few seconds. Such treatment will, as a matter of fact, influence the cathode or catalyser components, respectively, of the arrangement, too, and it results in the rapid onset of hydrogen generation even in tap water and in a more powerful hydrogen and/or electrical power generation in conductive solutions or electrolytes, respectively, which are typically used in generator units of this type (e.g. sea water).

The embodiments and aspects of the invention explained above are not determined to limit the scope of the invention, which is exclusively to be determined by the attached claims. Many modifications of the inventive concept are possible within the scope of the claims and, more specifically, arbitrary combinations of the several claim features are considered to be within the scope of the invention.

**Claims**

1. Anode element for a fuel and electrical power generator unit, the anode element being formed as a massive metal body made from at least one of magnesium, zinc, or aluminium, or an alloy of at least one of these and comprising a micro- or nanoporous activated surface layer.

2. Anode element of claim 1, wherein the micro- or nanoporous activated surface layer comprises a halide, in particular chloride, of the respective anode metal.

3. Anode element of claim 1 or 2, wherein the massive metal body is in the overall shape of a sheet or plate or ingot and comprises two opposing micro- or nanoporous activated surface layers.

4. Anode element of one of the preceding claims, wherein the micro- or nanoporous activated surface layer has a thickness between 10 $\mu$m and 1 mm, preferably between 50 and 500 $\mu$m, and has a surface roughness between 200 nm and 500 $\mu$m, preferably between 1 and 100 $\mu$m.

5. Process for making an anode element according to one of the preceding claims, wherein a pre-fabricated massive metal body is treated in at least one surface treatment step with at least one alkaline or acidic solution for providing the micro- or nanoporosity and the activated state of the surface layer.

6. Process of claim 5, wherein the pre-fabricated massive metal body is treated (a) with an acid etch, in particular comprising chromic acid, and thereafter (b) with a hydrogen halide solution, in particular comprising hydrochloric acid.

7. Process of claim 6, wherein the or at least one surface treatment step comprises immersing the pre-fabricated massive metal body into a respective liquid.

8. Process of claim 6, wherein the or at least one surface treatment step comprises subjecting the surface or surfaces of the pre-fabricated massive metal body to a flow of a respective steam.

9. Process of one of claims 6 to 8, wherein prior to the surface treatment step a cleaning step is carried out, in particular a soaking the massive metal body into an alkaline solution.

10. Process of one of claims 6 to 9, wherein prior to step (a) and/or between steps (a) and (b) and/or after step (b) at least one rinsing step is carried out, in particular a rinsing with water ( preferably deionised).

11. Process of one of claims 5 to 10, wherein the or at least one surface treatment step for providing the micro- or nanoporosity and the activated state of the surface layer is carried out in an assembled configuration of the pre-fabricated massive metal body, preferably in a state wherein a plurality of pre-fabricated bodies is arranged in predetermined relationship to each other and/or to anode or catalyser bodies, respectively, of the fuel and electrical power generator unit.

12. Process according to claim 11, wherein the arrangement of anode elements and cathode or catalyser elements, respectively, of the fuel and electrical power generator unit is, after the last surface treatment step, immediately inserted into tap water or a low-concentration saline solution for starting hydrogen and electrical power generation.

13. Process of one of claims 5 to 11, wherein after the or the last surface treatment step in the anode element or the pre-assembled configuration is dried, preferably with compressed air or in an air blower stream and/or by heating.

Fig.1B

Fig.1A

Fig. 2

Fig. 3

Fig. 4

Europäisches
Patentamt
European
Patent Office
Office européen
des brevets

## EUROPEAN SEARCH REPORT

Application Number

EP 13 17 4188

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2011 249175 A (HONDA FOUNDRY CO LTD) 8 December 2011 (2011-12-08) * abstract * * paragraphs [0001], [0007], [0010] - [0012], [0014] - [0034], [0041] - [0044] * * claims * * figures * | 1-10 | INV. H01M4/04 H01M4/12 H01M4/24 H01M4/26 H01M4/42 H01M4/46 H01M12/06 H01M12/08 C01B3/08 |
| X | US 2006/003228 A1 (CHIN TSUNG-SHUNE [TW] ET AL) 5 January 2006 (2006-01-05) * abstract * * figures 7,8 * * paragraphs [0005] - [0009], [0014] - [0019], [0026], [0027], [0030], [0047] * * examples 1,2 * * claims 1,2,8-14 * | 1,3,5 | |
| X | LAN C J ET AL: "ZN-AL ALLOY AS A NEW ANODE-METAL OF A ZINC-AIR BATTERY", JOURNAL OF NEW MATERIALS FOR ELECTROCHEMICAL SYSTEMS, ECOLE POLYTECHNIQUE DE MONTREAL, MONTREAL, CA, vol. 9, no. 1, 1 January 2006 (2006-01-01), pages 27-32, XP001504999, ISSN: 1480-2422 * page 27, column 1, lines 1-13 * * page 28, column 1, line 20 - column 2, line 34 * * page 29, column 1, line 19 - page 30, column 1, line 18 * * page 31, column 1, line 33 - page 32, column 1, line 25 * * figures * | 1,5, 11-13 | TECHNICAL FIELDS SEARCHED (IPC)<br><br>H01M C01B |

-/--

The present search report has been drawn up for all claims

| Place of search | Date of completion of the search | Examiner |
|---|---|---|
| The Hague | 20 August 2013 | Riba Vilanova, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 17 4188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARK D W ET AL: "Rechargeable Zn-air Energy Storage Cells Providing High Power Density", KONGOP-HWAHAK = APPLIED CHEMISTRY FOR ENGINEERING : ACE, HAN'GUK KONGOP HWAHAKHOE, KOREAN SOCIETY OF INDUSTRIAL AND ENGINEERING CHEMISTRY, KR, vol. 23, no. 4, 1 August 2012 (2012-08-01) , pages 359-366, XP008164069, ISSN: 1225-0112 * abstract * * figure 2 * ----- | 1 | |
| X,P | JOEY D. OCON ET AL: "An etched nanoporous Ge anode in a novel metal-air energy conversion cell", PHYSICAL CHEMISTRY CHEMICAL PHYSICS, vol. 15, no. 17, 1 May 2013 (2013-05-01), pages 6333-6338, XP055075332, ISSN: 1463-9076, DOI: 10.1039/c3cp50885d * the whole document * ----- | 1 | TECHNICAL FIELDS SEARCHED (IPC) |
| A | US 3 716 413 A (EISNER S) 13 February 1973 (1973-02-13) * abstract * * figures 1-3,9 * * column 3, lines 1-7,31-32 * * column 4, lines 38-52 * * column 5, lines 37-55 * * column 6, line 10 - column 7, line 45 * ----- | 1-13 | |

The present search report has been drawn up for all claims

| Place of search | Date of completion of the search | Examiner |
|---|---|---|
| The Hague | 20 August 2013 | Riba Vilanova, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 17 4188

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2013

| Patent document cited in search report | | Publication date | Patent family member(s) | | Publication date |
|---|---|---|---|---|---|
| JP 2011249175 | A | 08-12-2011 | NONE | | |
| US 2006003228 | A1 | 05-01-2006 | TW | I255576 B | 21-05-2006 |
| | | | US | 2006003228 A1 | 05-01-2006 |
| US 3716413 | A | 13-02-1973 | NONE | | |

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4822698 A
- US 6372371 B1
- US 5405717 A
- US 5225291 A
- US 5427871 A
- US 4601961 A
- US 5288564 A
- US 6656628 B2
- US 5004654 A
- US 5360680 A
- US 5376471 A
- US 5415949 A
- US 5316632 A
- US 6127061 A
- US 3256504 A
- US 3892653 A
- US 4436793 A
- US 20080268306 A